# EUROPÄISCHE PATENTSCHRIFT

(11) **EP 3 676 890 B1**
(45) Veröffentlichungstag und Bekanntmachung des Hinweises auf die Patenterteilung: **03.11.2021**
(21) Anmeldenummer: 18758545.0
(22) Anmeldetag: 02.08.2018
(51) Int. Cl.: H01M 50/20, H01M 10/653, H01M 10/6555

(54) **ENERGIESPEICHERSYSTEM**
SYTÈME DE STOCKAGE D'ENERGIE
ENERGY STORAGE SYSTEM

(30) Priorität: 29.08.2017 DE 102017008102
(43) Veröffentlichungstag der Anmeldung: 08.07.2020
(73) Patentinhaber: Carl Freudenberg KG, 69469 Weinheim (DE)
(72) Erfinder: KRITZER, Peter, 67147 Forst (DE); DIRR, Reiner, 80997 München (DE); NAHRWOLD, Olaf, 67071 Ludwigshafen (DE); KLEMT, Michael, 74629 Pfedelbach (DE)
(86) Internationale Anmeldenummer: PCT/EP2018/070964
(87) Internationale Veröffentlichungsnummer: WO 2019/042698

(56) Entgegenhaltungen:
- EP-A1- 0 454 015
- CN-A- 101 533 924
- DE-A1-102011 075 676
- US-A- 5 578 393
- US-A1- 2011 159 340
- US-A1- 2016 099 442
- US-A1- 2016 301 045

## Beschreibung

Die Erfindung betrifft ein Energiespeichersystem, umfassend ein Gehäuse, in welchem mehrere Speicherzellen angeordnet sind, wobei die Speicherzellen mittels einer zwischen den Speicherzellen angeordneten Einrichtung thermisch voneinander isoliert sind.

Energiespeichersysteme, insbesondere wiederaufladbare Speicher für elektrische Energie, sind vor allem in mobilen Systemen weit verbreitet. Wiederaufladbare Speicher für elektrische Energie werden beispielsweise in tragbaren elektronischen Geräten wie Smartphones oder Laptops eingesetzt. Des Weiteren werden wiederaufladbare Speicher für elektrische Energie vermehrt zum Bereitstellen von Energie für elektrisch angetriebene Fahrzeuge eingesetzt. Weitere Einsatzgebiete von elektrischen Energiespeichersystemen sind stationäre Anwendungen, beispielsweise in Backup-Systemen, in Netzwerkstabilisierungssystemen und zur Speicherung elektrischer Energie aus erneuerbaren Energiequellen.

Ein häufig eingesetztes Energiespeichersystem ist dabei ein wiederaufladbarer Speicher in Form eines Lithium-Ionen-Akkumulators. Lithium-Ionen-Akkumulatoren weisen, wie andere wiederaufladbare Speicher für elektrische Energie auch, zumeist mehrere Speicherzellen auf, welche gemeinsam in einem Gehäuse verbaut sind. Mehrere elektrisch miteinander verbundene Speicherzellen bilden dabei ein Modul.

Dabei erstreckt sich das Energiespeichersystem nicht nur auf Lithium-lonen-Akkumulatoren. Auch andere wiederaufladbare Batterie-Systeme wie Lithium-Schwefel-Batterien, Feststoff-Batterien oder Metall-Luft-Batterien sind denkbare Energiespeichersysteme. Des Weiteren kommen auch Superkondensatoren als Energiespeichersystem in Betracht.

Energiespeichersysteme in Form von wiederaufladbaren Speichern weisen die höchste elektrische Kapazität nur in einem begrenzten Temperaturspektrum auf. Bei Über- bzw. Unterschreiten des optimalen Betriebstemperaturbereichs fällt die elektrische Kapazität des Speichers stark ab, bzw. die Funktionalität des Energiespeichers ist beeinträchtigt.

Darüber hinaus können zu hohe Temperaturen zu einer Schädigung des Energiespeichersystems führen. In diesem Zusammenhang ist insbesondere bei Lithium-Ionen-Zellen das sogenannte thermische Durchgehen (thermal runaway) bekannt. Dabei werden in kurzer Zeit hohe thermische Energiemengen sowie gasförmige Abbauprodukte frei, woraus ein hoher Druck und hohe Temperaturen im Gehäuse resultieren. Dieser Effekt ist insbesondere problematisch bei Energiespeichersystemen mit hoher Energiedichte, wie sie beispielsweise zur Bereitstellung elektrischer Energie zur Bereitstellung von elektrisch angetriebenen Fahrzeugen erforderlich ist. Durch zunehmende Energiemengen einzelner Zellen und Erhöhung der Packungsdichte der in dem Gehäuse angeordneten Zellen vergrößert sich die Problematik des thermischen Durchgehens.

Im Bereich einer durchgehenden Zelle können über eine Zeitdauer von etwa 30 Sekunden Temperaturen im Bereich von 600 °C entstehen. Die Einrichtung zum thermischen Isolieren muss einer derartigen Beanspruchung standhalten und den Energieübergang auf Nachbarzellen so reduzieren, dass die Temperaturbelastung der Nachbarzellen lediglich etwa 150 °C beträgt. Anschließend ist es erforderlich, den Energiespeicher, beziehungsweise die schadhafte Zelle auszutauschen. Insofern ist es zwar zulässig, dass sich die Einrichtung während dieses Vorgangs irreversibel verändert. Wesentlich ist die Begrenzung der Energieübertragung auf Nachbarzellen, um zu verhindern, dass auch diese thermisch durchgehen.

Um die Folgen einer Erhitzung abzumildern ist es aus dem Stand der Technik bekannt, zwischen den Zellen Phasenwechselmaterial einzusetzten, siehe z.B. US 2011/159340 A1 und US 5 578 393 A.

Der Erfindung liegt die Aufgabe zugrunde, ein Energiespeichersystem bereitzustellen, welches eine hohe Betriebssicherheit aufweist.

Diese Aufgabe wird mit den Merkmalen von Anspruch 1 gelöst. Auf vorteilhafte Ausgestaltungen nehmen die Unteransprüche Bezug.

Das erfindungsgemäße Energiespeichersystem umfasst ein Gehäuse, in welchem mehrere Speicherzellen angeordnet sind, wobei die Speicherzellen mittels einer zwischen den Speicherzellen angeordneten Einrichtung thermisch voneinander isoliert sind, wobei die Einrichtung derart ausgebildet ist, dass die Speicherzellen voneinander beabstandet sind, wobei die Einrichtung aus einem temperaturbeständigem Werkstoff ausgebildet ist. Die Zellen können hierbei prismatische Zellen oder Pouch-Zellen sein. Die Erfindung erlaubt darüber hinaus auch eine Adaption auf Speichersysteme mit Rundzellen.

Dadurch, dass die Speicherzellen voneinander beabstandet sind, kann eine direkte Wärmeübertragung von einer Speicherzelle auf eine benachbarte Speicherzelle verhindert werden. Durch die zwischen den Speicherzellen angeordnete Einrichtung verringert sich die Wärmeübertragung nochmals. Vorzugsweise ist die Einrichtung ferner elastisch ausgebildet. Dadurch kann die Einrichtung etwaigen Dimensionsänderungen der Speicherzellen folgen und so verhindern, dass sich innerhalb der Speicherzellen ein unzulässig hoher Druck aufbaut. Durch die temperaturbeständige Ausgestaltung der Einrichtung kann ferner verhindert werden, dass die Einrichtung auch bei einem thermischen Durchgehen einer Speicherzelle zerstört wird, so dass ein Übergreifen des thermischen Durchgehens auf benachbarte Speicherzellen verhindert werden kann. Die elastische Ausgestaltung kann durch Materialwahl und/oder Formgebung der Einrichtung realisiert werden.
Weiter weist die Einrichtung Erhebungen und Vertiefungen auf.
Eine derartige Strukturierung ergibt sich beispielsweise, wenn die Einrichtung waffelförmig strukturiert ist. Ferner ergibt sich eine derartige Ausgestaltung, wenn die Einrichtung eine wellenförmige Profilierung aufweist.

Ferner kommen Materialien in der Einrichtung zum Einsatz, welche bei Erwärmung über 200°C einer endothermen Reaktion unterliegen, beispielsweise durch Umkristallisation oder dem Freisetzen von Kristallwasser. Eine solche Ausgestaltung führt zu einem zusätzlichen Wärmepolster und verlangsamt den Wärmeübergang zwischen den Zellen. Derartige Materialien sind beispielsweise anorganische Salze wie Nitrate oder Carbonate. Denkbar sind auch Hydroxide oder Oxy-Hydroxide, die unter erhöhten Temperaturen Wasser abspalten können. So werden typischerweise bei der Wasserabspaltung von Mg(OH)₂ bei Temperaturen oberhalb von etwa 350°C Energiemengen von etwa 1.200 kJ/kg absorbiert. Bei der Wasserabspaltung aus Al(OH)₃ werden bei Temperaturen oberhalb von etwa 250°C Energiemengen von um 1.100 kJ/kg absorbiert.

Besonders bevorzugt weist die Einrichtung eine geringe Wärmeleitfähigkeit auf. Die Wärmeleitfähigkeit der Einrichtung beträgt bevorzugt höchstens 0,1 W/mK. In diesem Zusammenhang ist insbesondere relevant, den Wärmeübergang zwischen den Zellen zu minimieren. Dabei kann die Einrichtung beispielsweise aus einem Werkstoff mit geringer Wärmeleitfähigkeit ausgebildet sein. Alternativ oder zusätzlich kann die Einrichtung eine Formgebung aufweisen, welche den Wärmeübergang verringert. Das kann beispielsweise durch Verringerung der Kontaktfläche, Labyrinth-Strukturen und dergleichen erfolgen.

Die Einrichtung ist vorzugsweise flächig ausgebildet, so dass sich die Speicherzellen entlang der einander zugewandten Hauptseiten an der Einrichtung abstützen können. Dadurch ergibt sich eine mechanisch stabile Anordnung der Speicherzellen. Bei dieser Ausgestaltung vereinfacht sich auch die Montage des Energiespeichers.

Die Einrichtung kann dreidimensional strukturiert sein. Dadurch bilden sich Zonen der Einrichtung, die an den Speicherzellen anliegen und Zonen, welche von den Speicherzellen beabstandet sind. Es bilden sich Hohlräume, welche die thermische Isolierung verbessern.

Bei einer waffelförmigen Strukturierung der Einrichtung ergeben sich einander kreuzende Erhebungen, welche an den Speicherzellen anliegen und napfförmige Vertiefungen, welche zwischen den Erhebungen angeordnet sind. Dabei sind die Vertiefungen nicht strömungsleitend miteinander verbunden. Es bilden sich kleine Hohlraumzellen aus, welche eine hervorragende thermische Isolierung aufweisen. Im Zusammenhang mit der Verwendung eines elastischen Werkstoffs ist bei dieser Ausgestaltung vorteilhaft, dass die Hohlraumzellen zumindest während der Montage als Saugnäpfe fungieren können, so dass die Einrichtung durch einfaches Andrücken an den Zellen fixiert ist. Dadurch vereinfacht sich die Montage des Energiespeichers.

Dabei können die Hohlraumzellen einen rechteckigen, mehreckigen oder runden Querschnitt aufweisen.

Es ist auch denkbar die Einrichtung wellenförmig zu profilieren. Dabei ergeben sich abwechselnd Erhebungen und Vertiefungen, wobei die Speicherzellen linienförmig entlang der Erhebungen und Vertiefungen an der Einrichtung anliegen. Die Vertiefungen können durchströmt sein. Dies ist insbesondere dann vorteilhaft, wenn durch eine starke Temperaturänderung das in den Vertiefungen aufgenommene Gas eine große Volumenänderung erfährt. Das Gas kann in den durch die Erhebungen und die Vertiefungen gebildeten Kanälen abtransportiert werden.

Alternativ ist es denkbar, dass die Einrichtung hervorstehende Stege aufweist. Dadurch bilden sich großflächige Zonen aus, welche von den Speicherzellen beabstandet sind. Der Kontaktbereich der Einrichtung zu den Speicherzellen ist verhältnismäßig klein.

In diesem Zusammenhang ist insbesondere denkbar, für die Stege ein anderes Material auszuwählen als für die übrigen Bereiche der Einrichtung. Bei dieser Ausgestaltung unterliegen die Stege der größten Temperaturbelastung, so dass die Stege aus einem besonders temperaturbeständigen Werkstoff gewählt sein können. Die übrigen Bereiche der Einrichtung können hingegen aus kostengünstigerem weniger temperaturbeständigem Material gewählt sein.

Ferner ist denkbar, dass die Einrichtung punktförmig hervorstehende Erhebungen aufweist. Derartige Erhebungen können insbesondere als Noppen ausgebildet sein, die aus der Oberfläche der Erhebungen hervorstehen. Bei dieser Ausgestaltung ergibt sich eine geringe Anlagefläche der Einrichtung an die Speicherzelle, wodurch die Wärmeübertragung begrenzt ist. Im Fall des thermischen Durchgehens wird das Material der Einrichtung lediglich im Bereich der Noppen stark thermisch beansprucht. Anfallendes Gas kann in den Zwischenräumen zwischen den Noppen abtransportiert werden. Dabei kann die Einrichtung derart ausgestaltet sein, dass auch bei ausgebauchten Zellen infolge Ladungszustand und Alterung ein Luftpolster zwischen Einrichtung und Speicherzelle gegeben ist. Die Noppen können aus einem anderen Material bestehen als die Basis der Einrichtung. In diesem Zusammenhang ist es vorteilhaft, für die Noppen einen besonders temperaturbeständigen Werkstoff zu wählen. Dabei ist der Materialbedarf zur Ausgestaltung der Noppen gering, so dass ein kostenintensiver Werkstoff gewählt werden kann.

Eine elastisch ausgestaltete Einrichtung stellt dabei im Neuzustand der Speicherzellen einen definierten Formschluss zwischen der Einrichtung und den Speicherzellen her und besitzt im gealterten Zustand der Zellen immer noch eine Porosität, um die thermische Isolation sicherzustellen.

Die Einrichtung kann derart ausgebildet sein, dass sich zwischen dem dem Rand der Speicherzellen zugeordneten Abschnitt der Einrichtung ein größerer Anpressdruck der Einrichtung an die Speicherzelle ergibt als an den übrigen Abschnitten. Bei dieser Ausgestaltung kann die Einrichtung am Außenumfang Stege aufweisen, welche weiter hervorstehen, als die Stege im Inneren der Einrichtung. Dadurch liegen die äußeren Bereiche der Einrichtung stets an den Speicherzellen an. Insbesondere Lithium-Ionen-Zellen unterliegen sowohl durch Ladevorgänge als auch durch Alterungsprozesse einer Volumenänderung, wobei sich die Speicherzellen entlang der Hauptseiten ausbauchen können. Dadurch, dass die Einrichtung am Außenumfang mit größerer Vorspannung an den Speicherzellen anliegt als an den inneren Bereichen, können sich die Speicherzellen ausdehnen, wobei der Anpressdruck der Speicherzellen an die Einrichtung in den inneren Bereichen allmählich ansteigt. Die Einrichtung kann sich zumindest abschnittsweise bis auf die Stirnseite der Speicherzelle erstrecken. Häufig sind Speicherzellen quaderförmig ausgebildet und weisen einander zugewandte Hauptseiten auf.

Eine ähnliche Wirkung kann erzielt werden, wenn die Einrichtung im Inneren einen geringeren Widerstand gegen Kompression aufweist als im Randbereich. Dies kann zum Beispiel durch dünnere Strukturen realisiert werden.

Erstreckt sich die Einrichtung zumindest abschnittsweise bis auf die Stirnseiten der Speicherzellen, kann die Einrichtung in diesen Bereichen eine Abdichtfunktion übernehmen und die Speicherzellen beispielsweise gegenüber dem Gehäuse abdichten.

Die Speicherzelle kann eine Notöffnung aufweisen, welche auf der Stirnseite angeordnet ist, wobei die Einrichtung die Notöffnung umgibt. Insbesondere prismatische Lithium-Ionen-Zellen weisen derartige Notöffnungen auf. Diese können in Form einer Sollbruchstelle, also einer gezielten Materialschwächung oder auch in Form einer Berstscheibe vorliegen. Steigt der Innendruck der Speicherzelle stark an und überschreitet schließlich eine vorgegebene Grenze, öffnet sich die Notöffnung und der innerhalb der Speicherzelle vorliegende Druck wird abgebaut. Die emittierten heißen Gase werden in der zumeist durch einen Sammel- oder Austrittskanal gezielt abgeleitet. Dieser überdeckt vorteilhafterweise die Notöffnungen der benachbarten Zellen. Hierdurch kann eine vollständige Zerstörung des gesamten Energiespeichersystems verhindert werden. Die die Notöffnung umgebende Einrichtung bildet dabei eine zusätzliche Abdichtung zum Austrittskanal und ermöglicht ein gezieltes Ableiten des aus der Speicherzelle austretenden Gases. Beispielsweise kann das austretende Gas in einen Austrittskanal geleitet werden. Die Einrichtung dichtet dann zusätzlich zwischen der Speicherzelle und dem Austrittskanal ab.

Der Bereich der dem Austrittskanal zugeordnet Abschnitt der Einrichtung kann dabei ebenfalls strukturiert sein. Dies gewährleistet im Falle einer Notöffnung eine thermische Isolation in diesem Bereich. Denkbar ist aber auch eine ebene Ausführung oder eine Ausführung, bei der die Konturen als zwischen Sollbruchstelle und dem Austrittskanal angeordnete Dichtelemente ausgestaltet sind, beispielsweise in Form von Dichtlippen.

Die Einrichtung kann zumindest abschnittsweise aus elastomerem Werkstoff ausgebildet sein. Hierbei ist vorteilhaft, dass die Einrichtung elastische Eigenschaften aufweist und insbesondere Formänderungen der Speicherzellen durch Formänderungen der Einrichtung aufgefangen werden können. Des Weiteren weisen elastomere Werkstoffe häufig nur ein geringes Wärmeleitvermögen auf. Ein vorteilhafter elastomerer Werkstoff ist beispielsweise Silikon-Kautschuk. Neben der geringen Wärmeleitfähigkeit zeichnet sich Silikon-Kautschuk dadurch aus, dass dieser sehr temperaturbeständig ist. Alternativ wäre es denkbar, die Einrichtung aus Flur-Kautschuk (FKM) auszubilden. Im Vergleich zu Silikon-Kautschuk ergibt sich hierbei aber ein problematisches Brandverhalten. Für thermisch besonders beanspruchte Anwendungen kommen auch Fluor-Silikone in Betracht.

Zusätzlich können dem Material anorganische Füllstoffe beigemischt werden, die die Temperaturbeständigkeit von Elastomeren und Kunststoffen verbessern.

Ferner können dem Material thermisch isolierende Füllstoffe zugemischt werden, die eine intrinsische Porosität und damit ein intrinsisches Gaspolster im Inneren des Materials erzeugen. Diese intrinsische Porosität liegt zusätzlich zu den oben beschriebenen makroskopischen, durch die Struktur dargestellten Hohlräumen vor. In diesem Zusammenhang sind beispielweise Glas-Hohlkugeln und hochporöse anorganische Materialien wie beispielsweise Aerosile, Blähstoffe oder Aerogele denkbar.

In einer nicht zur Erfindung gehörenden Ausgestaltung könnte das Material Füllstoffe enthalten, welche als latente Wärmespeicher fungieren. Derartige latente Wärmespeichermaterialien sind beispielsweise Phasenwechselmaterialien, wobei das Material vorzugsweise so gewählt ist, dass der Phasenübergang zwischen fest und flüssig mindestens 200°C beträgt.

Bei der Verwendung von Pouch-Zellen, deren Gehäuse eine thermische Belastbarkeit aufweisen, welche geringer ist als die von prismatischen oder Rundzellen, können auch Materialien zum Einsatz kommen, deren Phasenübergang bei noch niedrigeren Temperaturen liegt, beispielsweise bei einer Temperatur von 150°C. Denkbar ist darüber hinaus die Verwendung einer Kombination mehrerer latent wärmespeichernder Substanzen. Beispielsweise ist es denkbar, eine erste Substanz mit einem Phasenübergang bei 300°C mit einer zweiten Substanz mit einem Phasenübergang von 200°C zu kombinieren.

Sowohl das Phasenwechselmaterial als auch die zuletzt genannten Salze können gekapselt oder in porösen Füllstoffen in die Einrichtung eingebunden sein. Bei Verwendung von Substanzen, deren Schmelzpunkt oder Umwandlungstemperatur oberhalb der der Prozesstemperatur von typischerweise etwa 180°C liegt, kann eine Kapselung entfallen. Dadurch erhöht sich der potentielle Anteil an thermisch wirksamen Substanzen. Denkbar, aber nicht notwendigerweise benötigt, sind hierbei Massenanteile über 50%.

Denkbar ist auch, dass die Füllstoffe in eine flächige Matrix eingebracht sind, wobei die Matrix Bestandteil der Einrichtung ist. Die Matrix kann beispielsweise aus thermisch beständigem Vliesstoff bestehen. Diese Ausgestaltung ermöglicht eine homogene Verteilung der Füllstoffe über die Fläche der Einrichtung, wobei große Mengen Füllstoff in die Matrix einbringbar sind. Die Füllstoffe können dabei durch gängige Prozesse wie Rakeln oder Foulardieren in die flächige Matrix eingebracht werden. Die Matrix ist vorzugsweise in ein Elastomer eingebettet.

Aufgrund der anzustrebenden hohen Packungsdichte soll die Einrichtung einen möglichst geringen Platzbedarf aufweisen. Dazu soll die Einrichtung so dünn wie möglich ausgestaltet sein. Vorzugsweise besitzt die Einrichtung im unbelasteten Zustand eine Dicke von höchstens 5 mm, vorzugsweise beträgt die Dicke weniger als 1,5 mm. Denkbar ist es, eine Dicke der Einrichtung im Bereich von 0,3 mm oder weniger zu erzielen. Insbesondere für mobile Anwendungen kann in diesem Fall die flächige Basis der Einrichtung eine Dicke von 0,2 mm aufweisen. Die Dicke der an den Speicherzellen anliegenden beidseitigen Erhebungen beläuft sich in diesem Fall auf 0,15 mm.

Einige Ausgestaltungen des erfindungsgemäßen Energiespeichersystems werden nachfolgend anhand der Figuren näher erläutert. Diese zeigen, jeweils schematisch:
- Fig. 1: ein Energiespeichersystem mit einer Einrichtung mit Abstandshaltern;
- Fig. 2: ein Energiespeichersystem gemäß Figur 1 mit abweichender Werkstoffkonfiguration;
- Fig. 3: ein Energiespeichersystem gemäß Figur 1 mit porösen Abstandshaltern;
- Fig. 4: eine Einrichtung mit unterschiedlich hervorstehenden Abstandshaltern;
- Fig. 5: eine Einrichtung mit unterschiedlich dimensionierten Abstandshaltern;
- Fig. 6: eine wellenförmige Einrichtung;
- Fig. 7: eine wellenförmige Einrichtung mit wechselndem Wellenverlauf;
- Fig. 8: eine Einrichtung mit noppenförmigen Vorsprüngen;
- Fig. 9: ein Energiespeichersystem mit Kühleinrichtung;
- Fig. 10: eine Einrichtung mit umlaufendem Befestigungsrahmen;
- Fig. 11: ein Energiespeichersystem mit Notöffnung und Austrittskanal.

Die Figuren zeigen ein Energiespeichersystem 1, zum Speichern elektrischer Energie. Vorliegend ist das Energiespeichersystem 1 als Akkumulator, beispielsweise als Lithium-Ionen-Akkumulator ausgebildet. Das Energiespeichersystem 1 umfasst ein Gehäuse 2, in welchem mehrere Speicherzellen 3 angeordnet sind. Die Speicherzellen 3 können dabei in Form von prismatischen Zellen vorliegen und nebeneinander in dem Gehäuse 2 angeordnet sein.

Die Speicherzellen 3 sind mittels einer zwischen den Speicherzellen 3 angeordneten Einrichtung 4 thermisch voneinander isoliert. Dabei ist die Einrichtung 4 derart ausgebildet, dass die Speicherzellen 3 voneinander beabstandet sind. Des Weiteren ist die Einrichtung 4 aus temperaturbeständigem Werkstoff ausgebildet.

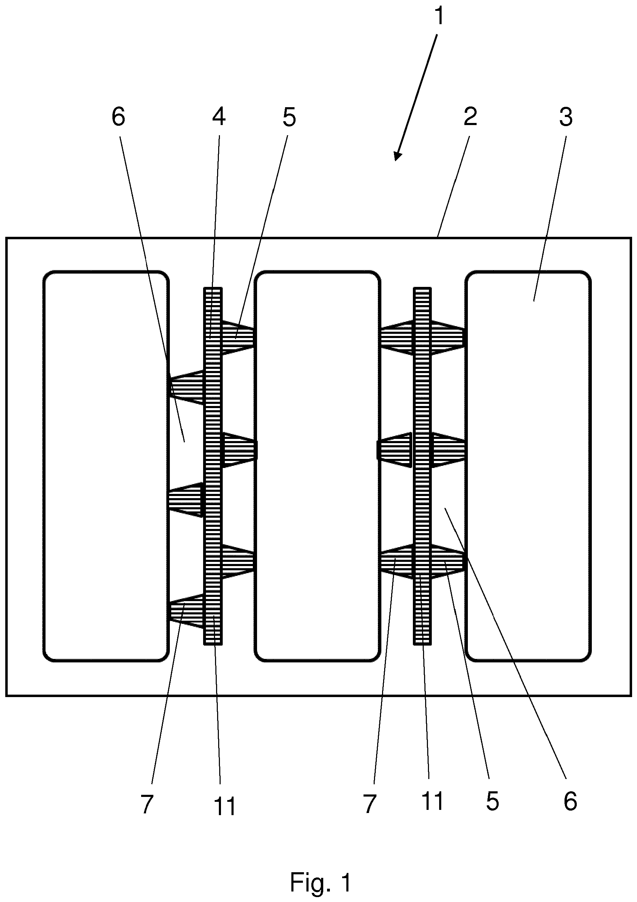

Figur 1 zeigt eine erste Ausgestaltung eines Energiespeichersystems 1. Bei dieser Ausgestaltung weist die Einrichtung 4 eine flächig ausgebildete Basis 11 auf, aus welcher Erhebungen 5 in Richtung der Speicherzellen 3 ragen. Insofern ist die Einrichtung 4 dreidimensional ausgebildet. Die Erhebungen 5 sind in Form von Stegen 7 ausgebildet. Zwischen den Erhebungen 5 bilden sich Vertiefungen 6 aus, so dass isolierende Luftpolster entstehen. Die Kontaktfläche der Erhebungen 5 zu den Speicherzellen 3 ist klein. Die Einrichtung 4 ist aus elastomerem Werkstoff, hier einem Silikon-Kautschuk ausgebildet. Die Stege 7 können einander gegenüberliegend oder versetzt zueinander auf der Basis 11 angeordnet sein. Die auf einer Hauptseite der Basis 11 angebrachten Stege 7 können einander kreuzen, so dass sich eine waffelförmige Profilierung der Einrichtung 4 ergibt.

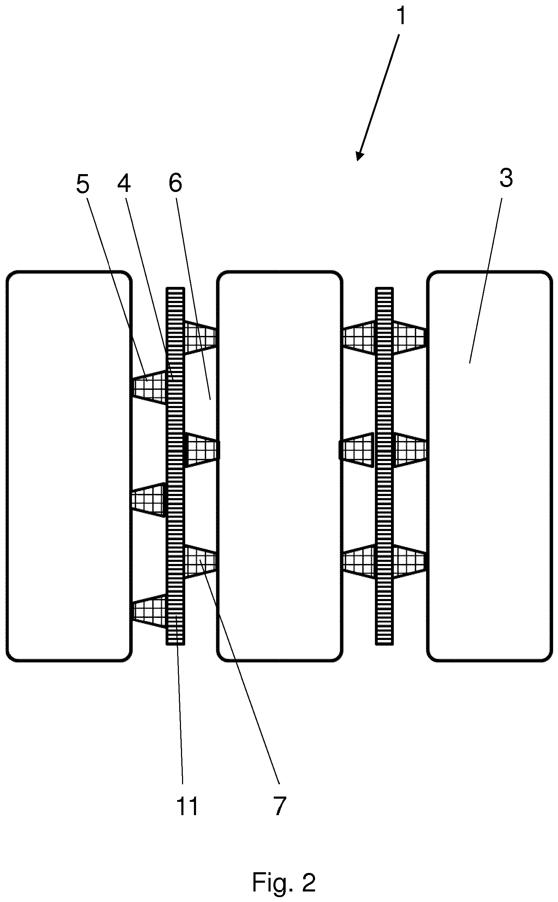

Figur 2 zeigt eine Ausgestaltung gemäß Figur 1, wobei bei der vorliegenden Ausgestaltung die Erhebungen 5, beziehungsweise Stege 7 aus einem anderen Material bestehen als die Basis 11. Dabei besteht die Basis 11 aus einem temperaturbeständigen und formbeständigen Werkstoff, während die Erhebungen 5 aus einem temperaturbeständigen und elastischen Werkstoff bestehen. Als Material für die Basis 11 kommt dabei beispielsweise ein Duromer, eine Glimmerfolie oder ein Glasgewebe in Betracht und als Material für die Erhebungen 5 kommt beispielsweise ein Silikon-Kautschuk in Betracht.

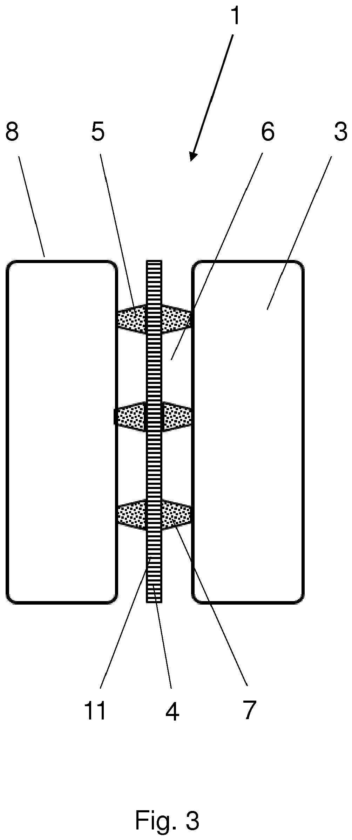

Figur 3 zeigt eine Ausgestaltung gemäß Figur 1, wobei bei der vorliegenden Ausgestaltung die Erhebungen 5, beziehungsweise Stege 7 ein poröses Material umfassen. Gemäß einer vorteilhaften Ausgestaltung sind die Erhebungen 5 aus Silikon-Kautschuk ausgebildet und mit porösen Füllstoffen, beispielsweise hohlen Glaskugeln, Blähmaterialien oder Aerogelen versehen. Die porösen Füllstoffe verbessern die thermische Isolierung.

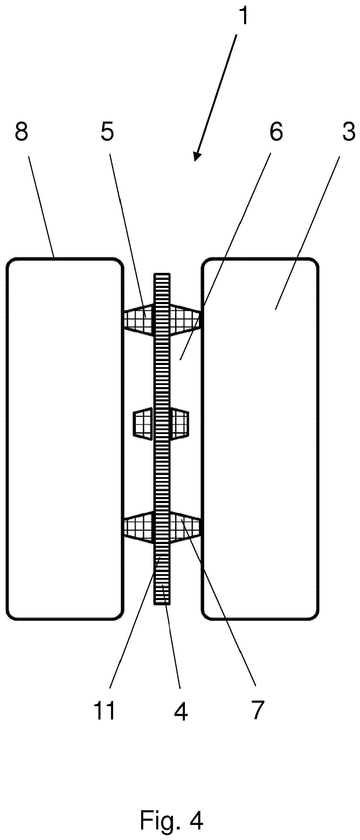

Figur 4 zeigt eine Ausgestaltung gemäß Figur 1, wobei die Erhebungen 5, beziehungsweise Stege 7 der Einrichtung 4 unterschiedlich weit von der Basis 11 abragen. Dabei stehen die Stege 7, die dem Rand 8 der Speicherzelle 3 zugeordnet sind, weiter hervor. Im Mittelbereich sind die Stege 7 bei dieser Ausgestaltung von den Speicherzellen 3 beabstandet, so dass sich die Speicherzellen 3 ausdehnen können.

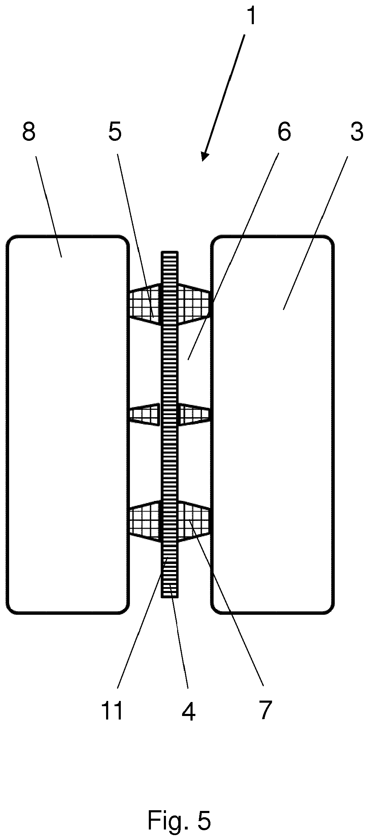

Figur 5 zeigt eine Ausgestaltung gemäß Figur 1, wobei die Erhebungen 5, beziehungsweise Stege 7 der Einrichtung 4 unterschiedlich dimensioniert sind. Dabei weisen die Stege 7 eine größere Querschnittsfläche auf, die dem Rand 8 der Speicherzelle 3 zugeordnet sind. Im Mittelbereich weisen die Stege 7 bei dieser Ausgestaltung eine geringere Querschnittsfläche auf. Dadurch lassen sich die innen angeordneten Stege 7 leichter verformen, so dass sich bei einer Ausdehnung der Speicherzellen 3 geringe Kräfte einstellen.

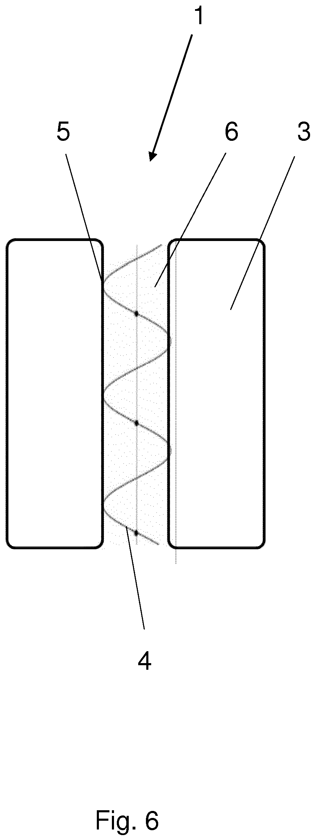

Figur 6 zeigt eine weitere Ausgestaltung eines Energiespeichersystems 1. Bei dieser Ausgestaltung weist die Einrichtung 4 eine wellenförmig ausgebildete Basis 11 auf, so dass Erhebungen 5 entstehen, welche an den Speicherzellen 3 anliegen und Vertiefungen 6, welche ein Luftpolster einschließen. Insofern ist auch diese Einrichtung 4 dreidimensional ausgebildet. Die Erhebungen 5 sind in Form von Stegen 7 ausgebildet. Die Einrichtung 4 ist aus elastomerem Werkstoff, hier einem Silikon-Kautschuk ausgebildet.

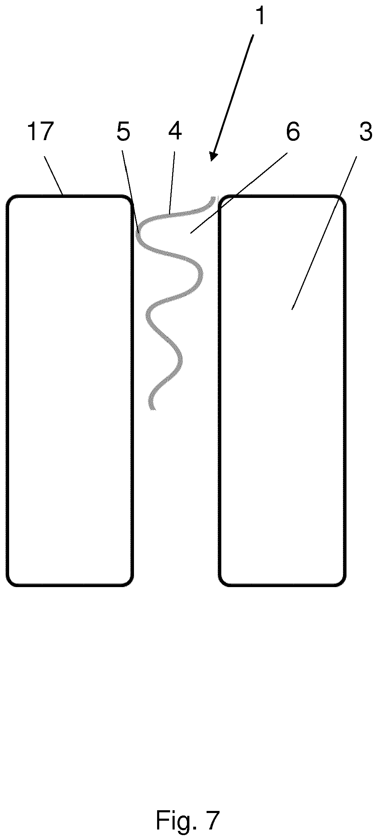

Figur 7 zeigt eine Ausgestaltung gemäß Figur 6, wobei die Wellenstruktur so ausgebildet ist, dass die Wellenamplitude der Einrichtung 4 in dem dem Rand 8 der Speicherzelle 3 zugeordneten Abschnitt größer ist als in dem inneren Bereich. Dadurch können sich die Speicherzellen 3 in diesem Bereich ausdehnen.

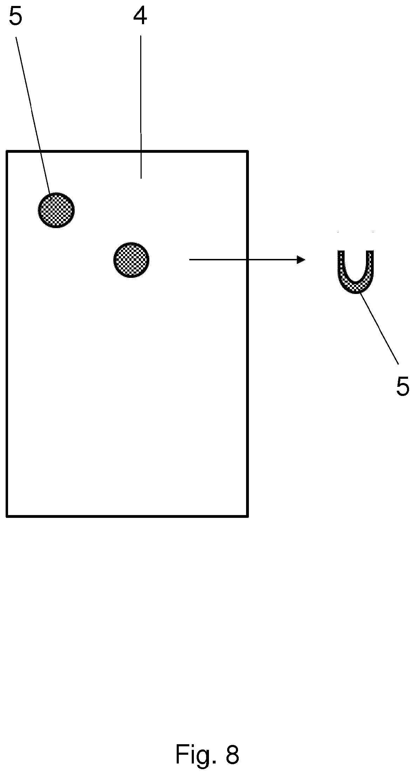

Figur 8 zeigt eine weitere Ausgestaltung eines Energiespeichersystems 1. Bei dieser Ausgestaltung weist die Einrichtung 4 eine flächig ausgebildete Basis 11 auf, aus welcher noppenförmige Erhebungen 5 in Richtung der Speicherzellen 3 ragen. Insofern ist die Einrichtung 4 dreidimensional ausgebildet. Zwischen den Erhebungen 5 bilden sich Vertiefungen 6 aus, so dass isolierende Luftpolster entstehen. Die Einrichtung 4 ist aus elastomerem Werkstoff, hier einem Silikon-Kautschuk ausgebildet. Die Erhebungen 5 können einander gegenüberliegend oder versetzt zueinander auf der Basis 11 angeordnet sein.

Alternativ können in die Basis 11 napfförmige Vertiefungen eingebracht sein, welche ein Luftpolster bilden.

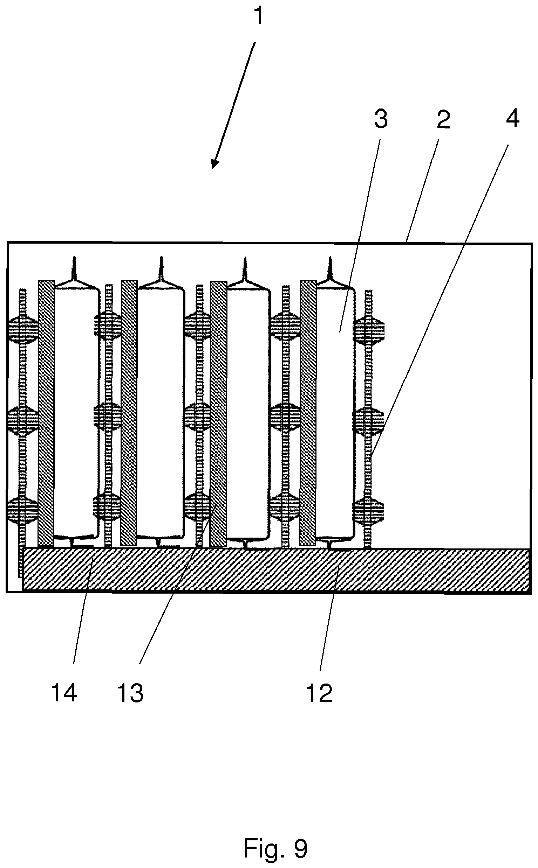

Figur 9 zeigt ein Energiespeichersystem 1 mit einer integrierten Kühleinrichtung 12. Die Kühleinrichtung 12 umfasst Kühlelemente 13, welche zwischen den Speicherzellen 3 angeordnet sind und welche mit einer Zentraleinheit 14 verbunden sind. Dabei ergibt sich ein Sandwich-Aufbau, bei welchem abwechselnd eine Speicherzelle 3, eine Einrichtung 4 und ein Kühlelement 13 in dem Gehäuse 2 angeordnet sind. Dadurch liegt an einer Seite einer Speicherzelle 3 eine Einrichtung 4 und an der anderen Seite ein Kühlelement 13 an.

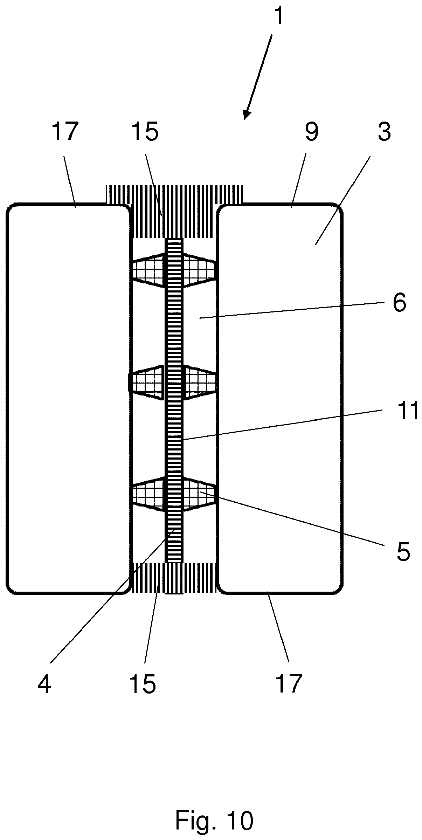

Figur 10 zeigt eine Ausgestaltung gemäß Figur 1, wobei die Einrichtung 4 mit einem umlaufenden Rahmen 15 versehen ist. Der Rahmen 15 kann dabei bündig zu dem Rand 17 der Speicherzellen 3 verlaufen oder über den Rand 17 überstehen.

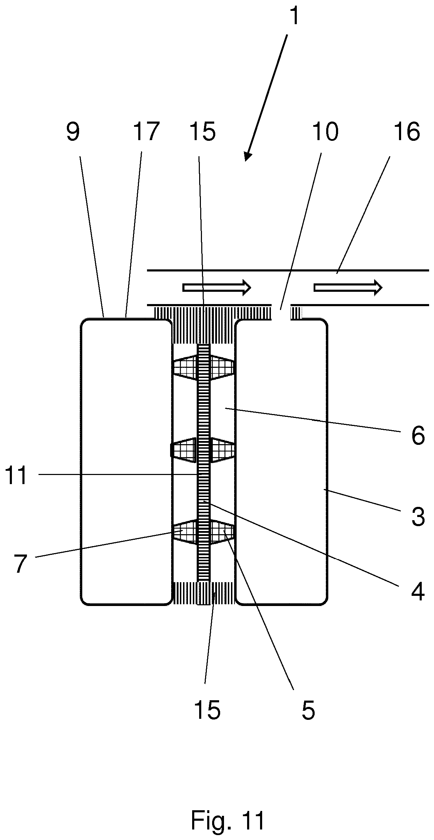

Figur 11 zeigt eine Ausgestaltung gemäß Figur 10, wobei sich die Einrichtung 4 zumindest abschnittsweise bis auf die Stirnseite 9 der Speicherzelle 3 erstreckt. Dabei ist der Rahmen 15 so ausgebildet, dass dieser die Stirnseite 9 der Speicherzelle 3 überlappt. Die Speicherzelle 3 weist eine Notöffnung 10 auf, welche auf der Stirnseite 9 angeordnet ist, wobei die Einrichtung 4 die Notöffnung 10 umgibt. Dadurch bildet die Einrichtung 4 eine Abdichtung zwischen der Notöffnung 10 der Speicherzelle 3 und dem Austrittskanal 16, durch welchen aus der Notöffnung 10 der Speicherzelle 3 austretendes Medium abgeleitet werden kann.

## Patentansprüche

1. Energiespeichersystem (1), umfassend ein Gehäuse (2), in welchem mehrere Speicherzellen (3) angeordnet sind, wobei die Speicherzellen (3) mittels einer zwischen den Speicherzellen (3) angeordneten Einrichtung (4) thermisch voneinander isoliert sind, wobei die Einrichtung (4) derart ausgebildet ist, dass die Speicherzellen (3) voneinander beabstandet sind, wobei die Einrichtung (4) aus temperaturbeständigem Werkstoff ausgebildet ist.
**dadurch gekennzeichnet, dass**
die Einrichtung (4) Erhebungen (5) und Vertiefungen (6) aufweist und dass die Einrichtung (4) ein Material enthält, welches bei Überschreiten einer Temperatur von 200°C einer endothermen chemischen Umwandlung unterliegt.

2. Energiespeichersystem nach Anspruch 1, **dadurch gekennzeichnet, dass** die Einrichtung (4) dreidimensional strukturiert ist.

3. Energiespeichersystem nach einem der Ansprüche 1 bis 2, **dadurch gekennzeichnet, dass** die Einrichtung (4) hervorstehende Stege (7) aufweist.

4. Energiespeichersystem nach einem der Ansprüche 1 bis 3, **dadurch gekennzeichnet, dass** die Einrichtung (4) waffelförmig strukturiert ist.

5. Energiespeichersystem nach einem der Ansprüche 1 bis 3, **dadurch gekennzeichnet, dass** die Einrichtung (4) eine wellenförmige Profilierung aufweist.

6. Energiespeichersystem nach einem der Ansprüche 1 bis 3, **dadurch gekennzeichnet, dass** die Einrichtung (4) noppenförmige Erhebungen aufweist.

7. Energiespeichersystem nach einem der Ansprüche 2 bis 6, **dadurch gekennzeichnet, dass** die Strukturierung derart ausgebildet ist, dass sich zwischen dem dem Rand (8) der Speicherzellen (3) zugeordneten Abschnitt der Einrichtung (4) ein größerer Anpressdruck der Einrichtung (4) an die Speicherzelle (3) ergibt als an den übrigen Abschnitten.

8. Energiespeichersystem nach einem der Ansprüche 1 bis 7, **dadurch gekennzeichnet, dass** sich die Einrichtung (4) zumindest abschnittsweise bis auf die Stirnseite (9) der Speicherzelle (3) erstreckt.

9. Energiespeichersystem nach Anspruch 8, **dadurch gekennzeichnet, dass** die Speicherzelle (3) eine Notöffnung (10) aufweist, welche auf der Stirnseite (9) angeordnet ist, wobei die Einrichtung (4) die Notöffnung (10) umgibt.

10. Energiespeichersystem nach einem der Ansprüche 1 bis 9, **dadurch gekennzeichnet, dass** die Einrichtung (4) zumindest abschnittsweise aus elastomerem Werkstoff ausgebildet ist.

11. Energiespeichersystem nach Anspruch 10, **dadurch gekennzeichnet, dass** die Einrichtung (4) aus Silikon-Kautschuk oder Fluor-Silikon-Kautschuk ausgebildet ist.

12. Energiespeichersystem nach einem der Ansprüche 1 bis 11, **dadurch gekennzeichnet, dass** der Einrichtung (4) eine Kühleinrichtung (12) zugeordnet ist.

## Claims

1. Energy storage system (1) comprising a housing (2) in which a plurality of storage cells (3) are arranged, wherein the storage cells (3) are thermally insulated from one another by means of a device (4) arranged between the storage cells (3), wherein the device (4) is designed in such a way that the storage cells (3) are spaced apart from one another, wherein the device (4) is formed from temperature-resistant material,
**characterized in that**
the device (4) has raised portions (5) and recessed portions (6), and **in that** the device (4) contains a material which is subject to an endothermic chemical conversion when it exceeds a temperature of 200°C.

2. Energy storage system according to Claim 1, **characterized in that** the device (4) is three-dimensionally structured.

3. Energy storage system according to one of Claims 1 or 2, **characterized in that** the device (4) has protruding webs (7).

4. Energy storage system according to one of Claims 1 to 3, **characterized in that** the device (4) is structured in a waffle-like manner.

5. Energy storage system according to one of Claims 1 to 3, **characterized in that** the device (4) has a wavelike profiling.

6. Energy storage system according to one of Claims 1 to 3, **characterized in that** the device (4) has stud-like raised portions.

7. Energy storage system according to one of Claims 2 to 6, **characterized in that** the structuring is formed in such a way that a greater contact pressure is exerted by the device (4) on the storage cell (3) between that section of the device (4) which is associated with the edge (8) of the storage cells (3) than at the other sections.

8. Energy storage system according to one of Claims 1 to 7, **characterized in that** the device (4), at least in sections, extends up to the end side (9) of the storage cell (3).

9. Energy storage system according to Claim 8, **characterized in that** the storage cell (3) has an emergency opening (10) which is arranged on the end side (9), wherein the device (4) surrounds the emergency opening (10).

10. Energy storage system according to one of Claims 1 to 9, **characterized in that** the device (4), at least in sections, is formed from elastomeric material.

11. Energy storage system according to Claim 10, **characterized in that** the device (4) is formed from silicone rubber or fluorosilicone rubber.

12. Energy storage system according to one of Claims 1 to 11, **characterized in that** a cooling device (12) is associated with the device (4).

## Revendications

1. Système de stockage d'énergie (1) comprenant un boîtier (2) dans lequel sont disposées plusieurs cellules de stockage (3), les cellules de stockage (3) étant isolées thermiquement les unes des autres au moyen d'un dispositif (4) disposé entre les cellules de stockage (3), le dispositif (4) étant conçu de manière à ce que les cellules de stockage (3) soient espacées les unes des autres, le dispositif (4) étant conçu à partir d'une matière résistante à la température,
**caractérisé en ce que**
le dispositif (4) comporte des élévations (5) et des dépressions (6) et
le dispositif (4) contient un matériau qui est soumis à une transformation chimique endothermique lorsqu'une température de 200°C est dépassée.

2. Système de stockage d'énergie selon la revendication 1, **caractérisé en ce que** le dispositif (4) présente une structure tridimensionnelle.

3. Système de stockage d'énergie selon l'une des revendications 1 à 2, **caractérisé en ce que** le dispositif (4) comporte des nervures saillantes (7).

4. Système de stockage d'énergie selon l'une des revendications 1 à 3, **caractérisé en ce que** le dispositif (4) présente une structure à raidissage intégré.

5. Système de stockage d'énergie selon l'une des revendications 1 à 3, **caractérisé en ce que** le dispositif (4) présente un profil ondulé.

6. Système de stockage d'énergie selon l'une des revendications 1 à 3, **caractérisé en ce que** le dispositif (4) comporte des élévations en forme de bouton.

7. Système de stockage d'énergie selon l'une des revendications 2 à 6, **caractérisé en ce que** la structuration est conçue de telle sorte que, entre les portions du dispositif (4) associées aux bords (8) des cellules de stockage, il y ait une plus grande pression de contact du dispositif (4) des cellules de stockage (3) sur la cellule de stockage (3) que sur les autres portions.

8. Système de stockage d'énergie selon l'une des revendications 1 à 7, **caractérisé en ce que** le dispositif (4) s'étend au moins par portions jusqu'à la face frontale (9) de la cellule de stockage (3).

9. Système de stockage d'énergie selon la revendication 8, **caractérisé en ce que** la cellule de stockage (3) comporte une ouverture d'urgence (10) qui est disposée sur la face frontale (9), le dispositif (4) entourant l'ouverture d'urgence (10).

10. Système de stockage d'énergie selon l'une des revendications 1 à 9, **caractérisé en ce que** le dispositif (4) est conçu au moins par portions à partir d'une matière élastomère.

11. Système de stockage d'énergie selon la revendication 10, **caractérisé en ce que** le dispositif (4) est conçu à partir d'un caoutchouc silicone ou d'un caoutchouc fluorosilicone.

12. Système de stockage d'énergie selon l'une des revendications 1 à 11, **caractérisé en ce que** le dispositif (4) est associé à un dispositif de refroidissement (12).
